**Europäisches Patentamt**

**European Patent Office**

**Office européen des brevets**

(19)

(11) Veröffentlichungsnummer: **0 122 311**

**A1**

(12) ## EUROPÄISCHE PATENTANMELDUNG

(21) Anmeldenummer: **83103695.9**

(22) Anmeldetag: **16.04.83**

(51) Int. Cl.³: **B 26 B 27/00**
**B 60 R 21/10**

(43) Veröffentlichungstag der Anmeldung:
**24.10.84 Patentblatt 84/43**

(84) Benannte Vertragsstaaten:
**AT BE CH DE FR GB IT LI LU NL SE**

(71) Anmelder: **Menn, Hans-Dieter**
**An der Steinert 6**
**D-5880 Lüdenscheid(DE)**

(71) Anmelder: **Menn, Lothar**
**An der Steinert 6**
**D-5880 Lüdenscheid(DE)**

(72) Erfinder: **Menn, Hans-Dieter**
**An der Steinert 6**
**D-5880 Lüdenscheid(DE)**

(72) Erfinder: **Menn, Lothar**
**An der Steinert 6**
**D-5880 Lüdenscheid(DE)**

(74) Vertreter: **Hassler, Werner, Dr.**
**Postfach 17 04 Asenberg 62**
**D-5880 Lüdenscheid(DE)**

(54) **Schneidvorrichtung zum Durchtrennen eines Kraftfahrzeugsicherheitsgurtes.**

(57) Eine Schneidvorrichtung zum Durchtrennen eines Kraftfahrzeugsicherheitsgurtes mit einem taschenförmigen Behälter und mit einem in dem Behälter Aufnahme findenden, rechteckförmigen Halter (2) für eine Messerklinge (3), deren Schneidkante (21) parallel zu einer Rechteckseite ausgerichtet ist.

Von der genannten Rechteckseite (14) und senkrecht zu derselben geht ein Schlitz (15) aus, der sich in einen Querschlitz (16) mit einer Stützkante (17) parallel zu der Rechteckseite fortsetzt. Eine Kammer (18) schließt innerhalb des Halters (2) an die Stützkante (17) an. Die Messerklinge (3) findet innerhalb der Kammer (18) Aufnahm und steht mit ihrer Schneidkante (21) über die Stützkante (17) vor. Ein Deckel (22) deckt die Kammer (18) ab.

Fig. 1

EP 0 122 311 A1

Hassler, Werner, Dr.

Patentanwalt

Asenberg 62 · 15. April 1983

D-5880 Lüdenscheid (DE) · A 83 076

0122311

Anmelder: Herren

Menn, Hans-Dieter und Menn, Lothar

An der Steinerts 6

D-5880 Lüdenscheid (DE)

## Schneidvorrichtung
### zum Durchtrennen eines Kraftfahrzeugsicherheitsgurtes

### Beschreibung

Die Erfindung betrifft eine Schneidvorrichtung zum Durchtrennen eines Kraftfahrzeugsicherheitsgurtes mit einem taschenförmigen Behälter und mit einem in den Behälter Aufnahme findenden, rechteckförmigen Halter für eine Messerklinge, deren Schneidkante parallel zu einer Rechteckseite ausgerichtet ist.

Eine Schneidvorrichtung der genannten Art ist aus dem DE-GM 72 43 842 bekannt und dient zum Durchtrennen eines Kraftfahrzeugsicherheitsgurtes zur Bergung von verletzten Insassen. Bei dieser bekannten Vorrichtung ist der Halter mit der Messerklinge nach Art eines Klappmessers ausgebildet. Infolgedessen ist eine erhebliche Verletzungsgefahr gegeben. Dies gilt besonders für einen unbefugten Gebrauch durch Kinder. Jedoch auch beim bestimmungsgemäßen Gebrauch etwa nach einem Unfall, ist die Verletzungsgefahr für die Fahrzeuginsassen sowie die Helfer groß.

Aufgabe der Erfindung ist eine solche Ausbildung der Schneidvorrichtung, daß eine Verletzungsgefahr an der Schneidkante völlig ausgeschaltet ist, ohne daß die Funktion des Messers beeinträchtigt wird.

Diese Aufgabe wird nach der Erfindung dadurch gelöst, daß von der genannten Rechteckseite und senkrecht zu derselben ein Schlitz ausgeht, der sich in einen Querschlitz mit einer Stützkante parallel zu der Rechteckseite fortsetzt, daß eine Kammer innerhalb des Halters an die Stützkante anschließt, daß die Messerklinge innerhalb der Kammer Aufnahme findet und mit ihrer Schneidkante über die Stützkante vorsteht und daß ein Deckel die Kammer abdeckt.

Die Erfindung unterscheidet sich dadurch in nichtnaheliegender Weise vom Stand der Technik, daß die Schneidkante in den inneren Umriß des Halters verlegt ist. Allseitig stehen Schutzschenkel und andere Wandteile des Halters über die Schneidkante vor. Durch den Schlitz läßt sich jedoch der Halter bequem über einen Sicherheitsgurt schieben, so daß das Messer ungehindert an dem Sicherheitsgurt wirksam wird und denselben durchtrennt. Der Schlitz selbst kann so schmal ausgebildet sein, daß es unmöglich ist, mit den Fingern in den Schlitz hineinzudringen. Jegliche Verletzungsgefahr an der Schneidkante ist damit ausgeschaltet. Die Schneidvorrichtung nach der Erfindung erfüllt somit einen sehr hohen Sicherheitsstandard.

Ferner sieht die Erfindung vor, daß der Halter im wesentlichen als Rechteckplatte mit einer griffartigen Verdickung an der der Schneidkante gegenüberliegenden Rechteckseite ausgebildet ist. Dadurch wird die Handhabung des Halters wesentlich erleichtert.

Ferner sieht die Erfindung vor, daß die Kammer nach einer Plattenseite des Halters offen ist und etwa über die halbe Dichte des Halters reicht, daß auf der Innenseite der Kammer Zapfen zur Aufnahme einer Rasierklinge angeformt sind und daß der Deckel auf die genannten Zapfen aufgepreßt ist.

Weiter sieht die Erfindung vor, daß der Halter Rastnocken aufweist, die mit Ausnehmungen auf der Innenseite des Behälters zusammenwirken. Hierdurch ist ein unbeabsichtigtes Lösen des Halters aus dem Behälter oder ein Verlust des Halters ausgeschlossen.

Schließlich sieht die Erfindung vor, daß die Ausnehmungen des Behälters als Durchbrüche ausgebildet sind.

Eine Ausführungsform der Erfindung wird im folgenden unter Bezugnahme auf die anliegenden Zeichnungen erläutert, in denen darstellen:

Fig. 1 eine Ansicht des Halters,

Fig. 2 eine teilweise geschnittene Umklappung der Fig. 1,

Fig. 3 eine Halbansicht von der Rückseite der Fig. 1 mit abgenommenen Deckel,

Fig. 4 eine entsprechende Einzelansicht des Deckels,

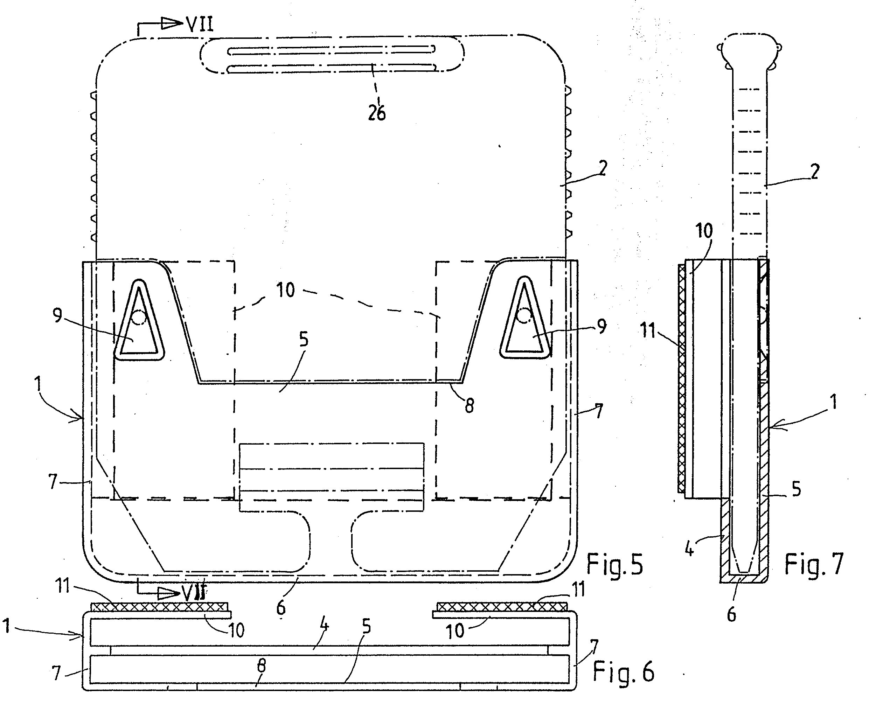

Fig. 5 eine Ansicht des taschenförmigen Behälters mit dem Halter,

Fig. 6 eine Draufsicht auf den Behälter und

Fig. 7 eine Umklappung zu Fig. 5.

Die Schneidvorrichtung nach der Erfindung umfaßt einen taschenförmigen Behälter 1 zur Aufnahme eines Halters 2 mit einer Messerklinge 3.

Der Behälter 1 besitzt eine Rückwand 4 und eine Vorderwand 5, die durch eine Bodenwand 6 und Seitenwände 7 miteinander verbunden sind. Die Rückwand 4 besitzt einen großen Ausschnitt. Ebenfalls weist die Vorderwand 5 einen Ausschnitt 8 auf, der an eine Profilierung des Halters 2 angepaßt ist. Innerhalb der Vorderwand 5 befinden sich zwei dreieckförmige Durchbrüche 9, die als Rastausnehmungen dienen. An den Seitenwänden 7 sitzen Stege 10 mit einer aufgebrachten Klebeschicht 11. Damit kann der Behälter 1 an einer Wand oder Platte innerhalb eines Kraftfahrzeuges angeklebt werden. Die Stege 10 ermöglichen es jedoch auch, den Behälter über einen Sicherheitsgurt zu schieben.

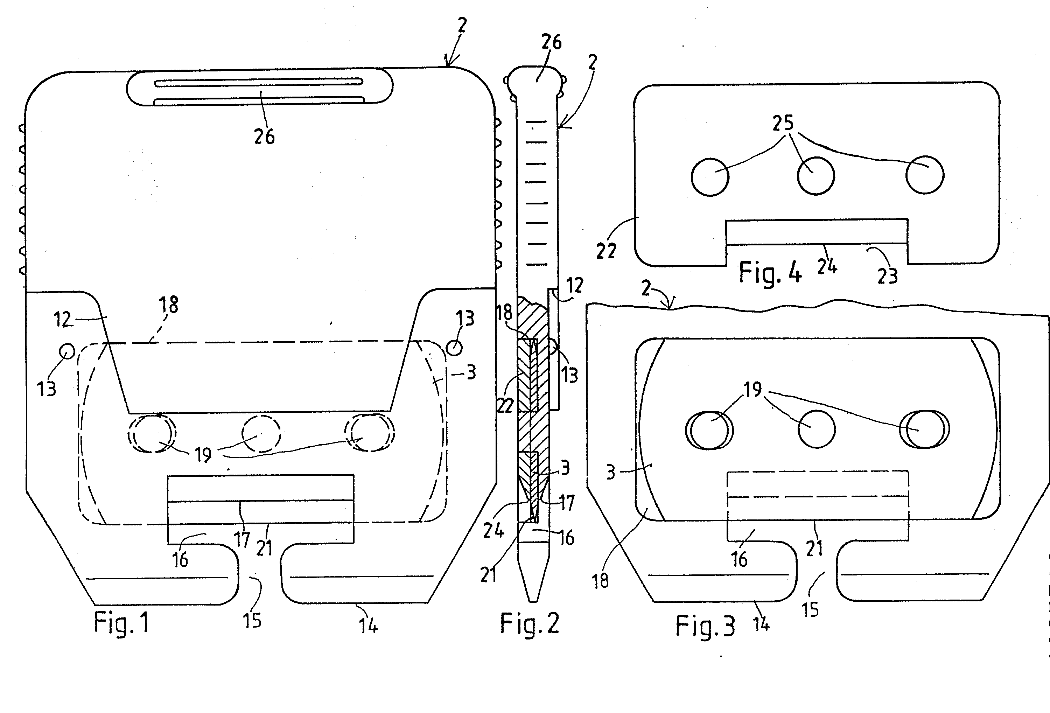

Der Halter 2 ist im wesentlichen als rechteckförmige Platte ausgebildet. Auf der in Fig. 1 sichtbaren Vorderseite 1 ist ein Stufenprofil 12 vorgesehen, das zu dem Profil des Ausschnittes 8 paßt. Ferner sind an der Vorderseite zwei Rastnocken 13 ausgebildet, die mit den Durchbrüchen 9 zusammenwirken. Die Rechteckseite 14 des Halters 2 ist so unterbrochen, daß etwa von der Mitte senkrecht zur Rechteckseite ein Schlitz 15 ausgeht, der sich in einen Querschlitz 16 fortsetzt, dessen als Stützkante 17 dienende Innenkante parallel zur Rechteckseite 14 verläuft. Innerhalb der Plattenfläche des Halters 2 ist eine rechtkantige Kammer 18 ausgebildet, die sich an die Stützkante 17 anschließt und etwa über die halbe Plattendicke reicht. Im Innern der Kammer 18 sind etwa auf der Mittellinie drei Zapfen 19 vorgesehen, die sich bis zur Plattenoberfläche erstrecken. Die Kammer 18 ist für die Aufnahme einer Messerklinge 3 in Form einer Rasierklinge ausgebildet, die als Messer dient und deren Schneidkante 21 über die Stützkante 17 vorsteht und innerhalb des Querschlitzes 16 liegt. Ein Deckel 22 schließt die Kammer 18 ab. Der Deckel 22 weist an einer Längsseite einen Ausschnitt 23 auf, dessen Innenkante ebenfalls eine Stützkante 24 bildet. Außerdem sind drei Durchbrüche 25 vorgesehen, die klemmend auf die Zapfen 19 passen.

Nach Einsetzen der Messerklinge bzw. der Rasierklinge 3 wird der Deckel 22 auf die Zapfen 19 aufgedrückt bzw. aufgepreßt und schließt dann die Kammer 18 ab. Die Schneidkante 21 steht über die Stützkanten 17, 24 vor und liegt innerhalb des Querschlitzes 16. Die Rechteckseite 14 bildet Schutzschenkel, die die Schneidkante 21 nahezu vollständig umschließen. Die Schneidkante 21 ist nur über den schmalen Schlitz 15 zugänglich. Dieser Schlitz 15 hat kleinere Abmessungen als eine Fingerbreite, so daß ein Benutzer und auch ein Kind nicht mit der Schneidkante 21 in Berührung kommen kann. Der Schlitz 15 ist jedoch so breit, daß ohne weiteres ein Sicherheitsgurt in den Schlitz 15 eingeschoben werden kann, so daß ein Durchtrennen desselben mittels der Schneidkante 21 möglich ist.

Der Halter 2 besitzt an der der Rechteckseite 14 gegenüberliegenden Seite eine griffartige Verdickung 26, die die Handhabung erleichtert.

Der Behälter 1 nimmt den Halter 2 auf. Der Halter 2 wird in die zwischen Rückwand 4 und Vorderwand 5 gebildete Tasche eingeschoben, bis die Rastnocken 13 in die Durchbrüche 9 einrasten. Damit sitzt der Halter mit dem Messer innerhalb des Behälters fest. Der Behälter selbst kann entweder durch die Klebeschicht 11 auf den Stegen 10 an einer Wand des Fahrzeuginnenraumes befestigt werden, damit er immer zugänglich ist. Andererseits kann man die Stege 10 über den Sicherheitsgurt schieben, so daß der Behälter 1 an dem Sicherheitsgurt gehalten ist und damit immer im Bedarfsfall zur Verfügung steht. Der Behälter 1 schließt den Schneidteil des Halters 2 ab. Nach dem Herausnehmen des Halters 2 ist die Schneidkante 21 in der zuvor beschriebenen Weise gegen eine Berührung vollständig geschützt. Beim Gebrauch des Halters 2 zum Durchtrennen eines Sicherheitsgurtes wird der Sicherheitsgurt in den Schlitz 15 eingeschoben und mit Hilfe der Schneidkante 21 des Messers 3 durchgetrennt.

Hassler, Werner, Dr.

Patentanwalt

Asenberg 62                                    15. April 1983

D-5880 Lüdenscheid (DE)                         A 83 076

Anmelder: Herren

Menn, Hans-Dieter und Menn, Lothar

An der Steinert 6

D-5880 Lüdenscheid (DE)

Schneidvorrichtung

zum Durchtrennen eines Kraftfahrzeugsicherheitsgurtes

Patentansprüche

1. Schneidvorrichtung zum Durchtrennen eines Kraftfahrzeugsicherheitsgurtes mit einem taschenförmigen Behälter (1) und mit einem in dem Behälter Aufnahme findenden, rechteckförmigen Halter (2) für eine Messerklinge (3), deren Schneidkante (21) parallel zu einer Rechteckseite ausgerichtet ist, dadurch gekennzeichnet, daß von der genannten Rechteckseite (14) und senkrecht zu derselben ein Schlitz (15) ausgeht, der sich in einen Querschlitz (16) mit einer Stützkante (17) parallel zu der Rechteckseite fortsetzt, daß eine Kammer (18) innerhalb des Halters (2) an die Stützkante (17) anschließt, daß die Messerklinge (3) innerhalb der Kammer (18) Aufnahme findet und mit ihrer Schneidkante (21) über die Stützkante (17) vorsteht und daß ein Deckel (22) die Kammer (18) abdeckt.

2. Schneidvorrichtung nach Anspruch 1, dadurch gekennzeichnet, daß der Halter (2) im wesentlichen als Rechteckplatte mit einer griffartigen Verdickung (26) an der der Schneidkante (21) gegenüberliegenden Rechteckseite ausgebildet ist.

3. Schneidvorrichtung nach Anspruch 2, dadurch gekennzeichnet, daß die Kammer (18) nach einer Plattenseite des Halters (2) offen ist und etwa über die halbe Dicke des Halters reicht, daß auf der Innenseite der Kammer (18) Zapfen (19) zur Aufnahem einer Rasierklinge angeformt sind und daß der Deckel (22) auf die genannten Zapfen aufgepreßt ist.

4. Schneidvorrichtung nach einem der Ansprüche 1 bis 3, dadurch gekennzeichnet, daß der Halter (2) Rastnocken (13) aufweist, die mit Ausnehmungen auf der Innenseite des Behälters (1) zusammenwirken.

5. Schneidvorrichtung nach Anspruch 4, dadurch gekennzeichnet, daß die Ausnehmungen des Behälters (1) als Durchbrüche (9) ausgebildet sind.

0122311

Fig.5

Fig.6

Fig.7

**Europäisches Patentamt**

# EUROPÄISCHER RECHERCHENBERICHT

**0122311**
Nummer der Anmeldung

EP 83 10 3695

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 359 688 (MARTOX ARGENTAX) <br> * Seiten 5,6; Anspruch 7; Abbildungen 1-5 * | 1,3 | B 26 B 27/00 <br> B 60 R 21/10 |
| | --- | | |
| Y | FR-A-1 092 244 (ROUSSILLON) <br> * Insgesamt * | 1,3 | |
| | --- | | |
| D,Y | DE-U-7 243 842 (GERNERT) <br> * Seite 4, Zeilen 13,14 * | 1,3 | |
| | --- | | |
| A | GB-A- 381 680 (HOLMES) <br> * Seite 2, Zeilen 71-90; Abbildung 1 * | 1,3 | |
| | --- | | |
| A | US-A-2 601 450 (O'NEILL) <br> * Abbildung 5 * | 2 | RECHERCHIERTE SACHGEBIETE (Int. Cl. ³) |
| | --- | | |
| A | US-A-3 362 069 (BLACKWELL) <br> * Anspruch 3; Abbildung 9 * | 4 | B 26 B <br> B 60 R <br> A 47 F |
| | --- | | |
| A | US-A-3 015 887 (HIGGINBOTHAM) <br> * Seite 1, Spalte 2, Zeilen 31-44; Abbildung 5 * | 4,5 | |
| | ----- | | |

Der vorliegende Recherchenbericht wurde für alle Patentansprüche erstellt.

| Recherchenort <br> DEN HAAG | Abschlußdatum der Recherche <br> 09-12-1983 | Prüfer <br> JUGUET J.M. |
|---|---|---|